# EUROPÄISCHE PATENTSCHRIFT

(11) **EP 1 475 356 B1**
(45) Veröffentlichungstag und Bekanntmachung des Hinweises auf die Patenterteilung: **14.06.2006**
(21) Anmeldenummer: 03004427.5
(22) Anmeldetag: 27.02.2003
(51) Int. Cl.: C03B 33/03, C03B 33/023

(54) **Verfahren und Vorrichtung zum Teilen von Glastafeln**
Method and apparatus to cut glass sheets
Méthode et procédé de découpe de feuilles de verre

(43) Veröffentlichungstag der Anmeldung: 10.11.2004
(73) Patentinhaber: Tecnopat AG, 9008 St. Gallen (CH)
(72) Erfinder: Lisec, Peter, 3363 Amstetten-Hausmening (AT)
(74) Vertreter: Beer, Manfred

(56) Entgegenhaltungen:
- DE-C- 10 041 519
- US-A- 5 857 603
- PATENT ABSTRACTS OF JAPAN vol. 2000, no. 13, 5. Februar 2001 (2001-02-05) & JP 2000 296435 A (CENTRAL GLASS CO LTD), 24. Oktober 2000 (2000-10-24)

## Beschreibung

Die Erfindung betrifft ein Verfahren zum Teilen von Glastafeln in Glas-Zuschnitte nach einem vorgegebenen Aufteilungsmuster, bei dem Glastafeln in wenigstens einem ersten Teilungsschritt nach einer Richtung (X-Schnitte) in Glastafel-Zuschnitte und diese dann in wenigstens einem zweiten Teilungsschritt nach einer zum ersten Teilungsschritt senkrecht stehenden Richtung (Y-Schnitte) in Glas-Zuschnitte geteilt werden.

Die bekannten Vorrichtungen zum Teilen von Glastafeln ("Glasschneidetische"), wie sie beispielsweise aus der EP 0 564 758 A bekannt sind, besitzen zum Bewegen und Positionieren der Glastafeln Förderbänder und/oder Förderrollen, die in die Auflageflächen des Glasschneidetisches eingelassen sind und die über die Auflagefläche angehoben werden, wenn eine Glastafel zu transportieren ist.

Solche Förderbänder sind auch bei Vorrichtungen zum Teilen von Verbundglas (WO 95/16640 A = EP 0 708 741 A) bekannt.

Zum Bewegen von Glastafeln auf Glasschneidetischen ist es weiters bekannt, an einer Schneidbrücke Mitnehmer für die Glastafeln vorzusehen. Bekannt sind an der Schneidbrücke befestigte Sauger (EP 0 192 290 A) oder am Rand einer Glastafel anlegbare Mitnehmer (US-A-5,944,244).

Beim Zerteilen von Glastafeln, ganz gleich ob es sich um Tafelglas (Float-Glas) oder um Verbundglas handelt, wird in der Regel so vorgegangen, dass zunächst über die gesamte Breite der Glastafel durchgehende Schnitte erzeugt und die Glastafel längs dieser Schnitte in mehrere Glastafel-Zuschnitte ("Traveren") zerteilt wird. Die so durch Zerteilen der Glastafel längs der X-Schnitte erhaltenen Glastafel-Zuschnitte ("Traveren") sind häufig noch in Richtung der Y-Schnitte zu teilen. Bislang werden die erhaltenen "Traveren" einzeln einer Zerteilvorrichtung zugeführt, in der nacheinander jeder vorher durch Teilen längs der X-Schnitte erhaltene Glastafel-Zuschnitt ("Travere") entlang der Y-Schnitte weiter in Glas-Zuschnitte geteilt wird.

Ein derartiges Verfahren ist in der DE 100 41 519 C offenbart, wobei in einem ersten Verfahrensschnitt Flachglasplatten in X-Richtung geschnitten, die so erhaltenen Zuschnitte anschließlich um 90° gedreht und in einem weiteren Verfahrensschritt in Y-Richtung geschnitten werden. Obzwar nach der Lehre gemäß DE 100 41 519 C das Zerschneiden der Glasplatten in X-Richtung kontinuierlich erfolgt, müssen die so erhaltenen Zuschnitte dennoch für den weiteren Verfahrensschritt "gesammelt" werden, um diese bereits in X-Richtung geschnittenen Teile ebenso in Y-Richtung zerschneiden zu können. Diese Arbeitsweise ist insoferne zeitraubend, als die in X-Richtung zugeschnittenen Glastafeln "warten" müssen, bis sie längs der Y-Richtung weiter zerteilt werden können.

Der Erfindung liegt die Aufgabe zu Grunde, ein Verfahren und eine Vorrichtung der eingangs genannten Gattung anzugeben, die ein rasches und einfaches Zerteilen von Glastafeln (Tafelglas und Verbundglas) erlauben und die das Zerteilen von weiter zu teilenden Glastafel-Zuschnitten in rationeller und insbesondere zeitsparender Art und Weise möglich machen.

Diese Aufgabe wird erfindungsgemäß mit einem Verfahren der eingangs genannten Art gelöst, welches dadurch gekennzeichnet, dass die nach dem Teilen in X-Richtung erhaltenen GlastafelZuschnitte auf dem nach der ersten Trennstelle (A) vorgesehenen Tisch (II) gemeinsam einer zweiten Trennstelle (B), an der die Glastafel-Zuschnitte längs der Y-Schnitte geteilt werden, zugeführt werden, dass wenigstens zwei solcher durch Öffnen der X-Schnitte erhaltene, weiter zu teilende GlastafelZuschnitte gleichzeitig der weiteren Trennstelle (B) zugeführt werden und dass die nebeneinander der Trennstelle (B) für die Y-Schnitte zugeführten Glastafel-Zuschnitte gleichzeitig in Glas-Zuschnitte entlang der Y-Schnitte geteilt werden.

Dass dabei Glastafel-Zuschnitte um unterschiedliche große Strecken vorgeschoben werden müssen, ist kein Problem, wenn die Fördervorrichtungen für die Glastafel-Zuschnitte voneinander unabhängig arbeiten können.

Was die Vorrichtung anlangt, wird diese Aufgabe mit einer Vorrichtung gelöst, welche die Merkmale des unabhängigen Vorrichtungshauptanspruches aufweist.

Bevorzugte und vorteilhafte Weiterbildungen des erfindungsgemäßen Verfahrens einerseits und der erfindungsgemäßen Vorrichtung anderseits sind Gegenstand der Unteransprüche.

Insoweit die Vorrichtung betroffen ist, sind auf dem zwischen den beiden Trennstellen vorgesehenen Tisch zwei voneinander unabhängig betätigbare Förder-Vorrichtungen vorgesehen, mit denen die weiter zu teilenden Glastafel-Zuschnitte ("Traveren") der weiteren Trennstelle zugeführt werden können.

In einer bevorzugten Ausführungsform ist vor der ersten Trennstelle, also der Trennstelle, in der die X-Schnitte ausgeführt werden, keine Förder-Vorrichtung für Glastafeln vorgesehen, sondern die Glastafeln werden durch Schrägstellen des vor der ersten Trennstelle vorgesehenen Tisches in eine definierte Lage bewegt. Dies kann dadurch erfolgen, daß die Auflagefläche des Tisches, auf der die zu bewegende Glastafel liegt, so schräg gestellt (geneigt) ist oder wird, daß sie in Richtung auf eine Referenzlinie (Anlagekante) hin abfällt, und die auf ihr liegende Glastafel bis zu dieser Referenzlinie (Anlagekante) gleitet. Die Glastafel ist dann durch Anliegen an der wenigstens einen Referenzlinie (Anlagekante) definiert positioniert.

Durch Wahl des Winkels der Neigung der Auflagefläche und/oder durch Wahl des Reibungskoeffizienten zwischen Glastafel und Oberfläche der Auflagefläche kann unterschiedlich großen und schweren Glastafeln Rechnung getragen werden.

In einer Ausführungsform gleiten die Glastafeln auf einem zwischen der Auflagefläche des ersten Tisches und der Glastafel gebildeten Luftkissen. Ein Luftkissen als Gleitfläche für Glastafeln hat auch den Vorteil, daß man die Reibung zwischen Glastafel und Auflagefläche durch Einstellen des Drucks, mit dem Luft aus den Luftkissenöffnungen in der Auflagefläche strömt, auf den jeweils gewünschten Wert einstellen und bei Bedarf während der Bewegung einer Glastafel ändern kann. Dies bietet z.B. die Möglichkeit, am Beginn einer Bewegung der Glastafel die Reibung zu verringern und die Reibung vor dem Ende der Bewegung der Glastafel, beispielsweise wenn sie sich der Referenzlinie (Anlagekante) annähert, durch Absenken des Drucks der das Luftkissen bildenden Luft zu erhöhen.

Dabei besteht die Möglichkeit, eine an der die Referenzlinie bildenden Anlagekante anliegende Glastafel durch kraftschlüssiges Kuppeln der Glastafel mit einem Fördermittel um definierte Strecken zu bewegen, um sie definiert der ersten Trennstelle zuzuführen, in der die Glastafel geteilt wird (X-Schnitte).

Insoweit die Vorrichtung betroffen ist, ist die Auflageflächen vor der ersten Trennstelle, also der Zuführtisch für die erste Trennstelle (für X-Schnitte) in Richtung auf wenigstens eine Anlagekante abfallend schräggestellt oder gegebenenfalls zusätzlich kippbar ausgebildet, so daß sie unter einem Winkel zur Horizontalen ausgerichtet sind.

Des weiteren kann bei der erfindungsgemäßen Vorrichtung am Rand jedes Tisches wenigstens eine Anlagekante als Referenzlinie ausgebildet sein, die in der Regel zur nachgeordneten Trennstelle normal ausgerichtet ist. Diese Referenzlinie (Anlagekante) ist beispielsweise ein Förderband. Eine vom Förderband entlang der Anlagekante zu bewegende Glastafel oder ein Glastafel-Zuschnitt wird mit dem jeweiligen Förderband gekuppelt. Dieses Kuppeln erfolgt beispielsweise über wenigstens einen Kupplungs-Sauger, der auf einer Schiene parallel zum Förderband verschiebbar geführt ist. Nach dem Anlegen des Saugers an die Glastafel kann dieser in Richtung auf das Förderband zu belastet werden, so daß zwischen Förderband und Glastafel dadurch Kraftschluss entsteht, daß der eine Rand der Glastafel oder eines Glastafel-Zuschnittes vom an der Glastafel/Glastafel-Zuschnitt festgelegten Sauger gegen das Förderband gedrückt wird. Dies erlaubt es, die Glastafel mit Hilfe des Förderbandes auf der Auflagefläche gleitend zu bewegen. Ein gesonderter Antrieb für den Schlitten, der den Kupplungs-Sauger trägt, um diesen entlang der Anlagekante zu bewegen ist, ist nicht zwingend erforderlich.

Weitere Einzelheiten und Merkmale sowie Vorteile der Erfindung ergeben sich aus der nachstehenden Beschreibung eines bevorzugten Ausführungsbeispieles unter Bezugnahme auf die Zeichnungen, in der schematisch eine Schneidanlage (für Verbundglas) gezeigt ist.

Es zeigt:
Fig. 1 eine (Verbund-)Glasschneideanlage in Draufsicht;
Fig. 2 eine (Verbund-)Glasschneideanlage in Schrägansicht;
Fig. 3 schematisch einen Sauger zum Kuppeln einer Glastafel mit einem Förderband;
Fig. 4 eine Ausführungsform der (Verbund-)Glasschneideanlage mit einer zweiten Fördereinrichtung im Bereich vor der ersten Trennstelle;
Fig. 5 schematisch einen Schlitten mit Sauger der Fördervorrichtung von Fig. 4;
Fig. 6 in Schrägansicht (teilweise) den zwischen den beiden Trennstellen angeordneten Tisch; und
Fig. 7 den Tisch von Fig. 5 aus anderer Blickrichtung gesehen.

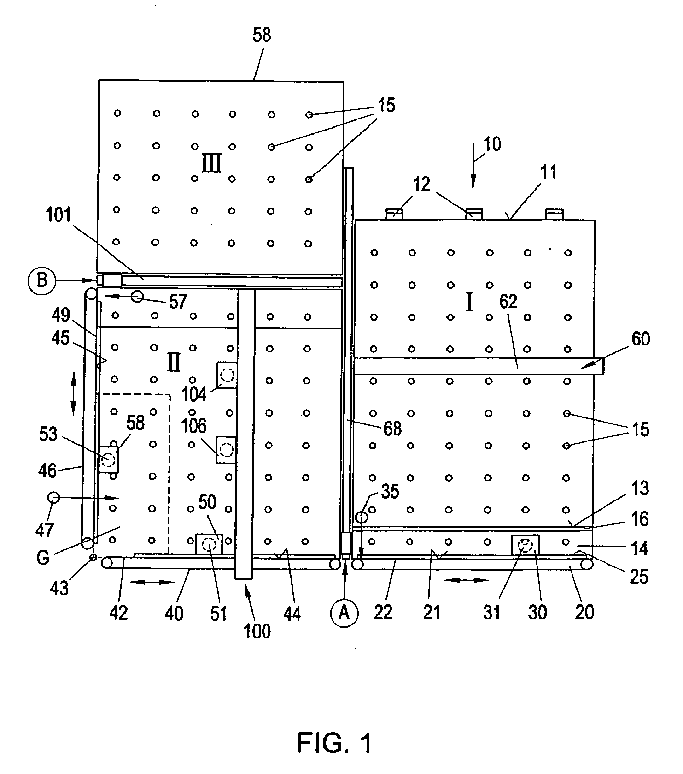

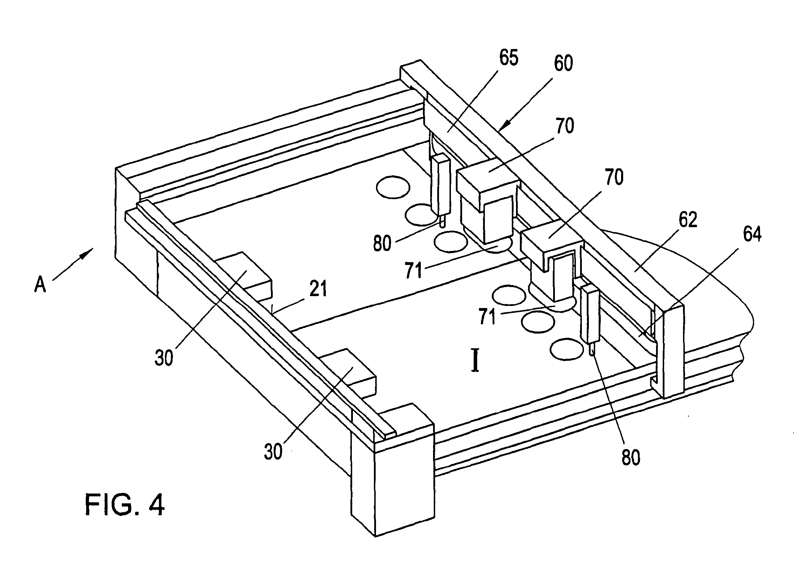

In den in den Fig. 1 bis 7 gezeigten Ausführungsformen ist die dargestellte Anlage für das Teilen von Verbundglas eingerichtet und ausgebildet. Dies bedeutet, daß in jeder Trennstelle A und B nicht nur Einrichtungen zum Ritzen von Verbundglas von oben und von unten her, sondern auch Einrichtungen zum Brechen von geritztem Verbundglas und zum Durchtrennen der Kunststofffolie zwischen den beiden Glasscheiben des Verbundglas vorgesehen sind. Die Trennstellen A und B können beispielsweise so wie in der US 5 704 959 A oder in der EP-1 108 690 A gezeigt und beschrieben, ausgebildet sein.

Wenn im folgenden der Begriff "Glastafel" verwendet wird, umfasst er sowohl einfaches Tafel- oder Flachglas ("Float-Glas") als auch Verbundglas.

Wenn die erfindungsgemäße Anlage als Anlage zum Teilen von normalem Glas (Float-Glas) bestimmt ist, ist in der Regel so, daß das Ritzen der Glastafel entlang der Aufteilungskontur gesondert von dem in den Trennstellen A und B ausgeführten Brechen der geritzten Glastafeln in Glastafel-Zuschnitte und in die Glas-Zuschnitte erfolgt. Es ist aber auch in Betracht gezogen, Glastafeln bzw. Glastafel-Zuschnitte in den Trennstellen A und B sowohl zu Ritzen als auch zu Brechen. Vorrichtungen zum Öffnen von Schnitten in Glastafeln ("Brechen") sind beispielsweise in der US 5 165 585 A oder in der US 5 857 603 A beschrieben. In Betracht gezogen ist weiters in den Trennstellen A und B die Trennvorrichtungen so auszubilden, daß sie wahlweise für das Zerteilen von Floatglas und von Verbundglas eingesetzt werden können.

Die Anlage besitzt einen ersten Tisch I, auf den in Richtung des Pfeiles 10 Glastafeln aufgelegt werden. Der Tisch I kann auch um seine einlaufseitige Kante 11 hochklappbar sein, so daß auf ihm Glastafeln aus einem Glastafellager auf Auflagehaken 12 an diesem Rand 11 aufgestellt und dann durch Zurücklappen des Tisches I in eine im wesentlichen horizontale Ausgangs-Lage umgelegt werden können.

An dem mit den Haken 12 bestückten Rand 11 gegenüberliegenden Rand 13 schließt an den Tisch I ein ortsfester Streifen 14 an.

Der Tisch I und der ortsfeste Streifen 14 sind vorzugsweise als Luftkissentische ausgebildet, d.h. es sind über ihre Auflageflächen verteilt Öffnungen 15 vorgesehen, aus denen Druckluft ausströmt, so daß eine auf dem Tisch I liegende Glastafel auf einem Luftkissen schwimmt.

Der Tisch I kann so wie die Tische II und III auf seiner Auflagefläche beispielsweise so ausgebildet sein, wie dies in der US-5 165 585-A gezeigt und beschrieben ist. Alternativ oder zusätzlich können die Tische I, II und III mit Rollen bestückt sein, so daß eine auf der Auflagefläche liegende Glastafel leicht bewegt werden kann.

Der Tisch I, genauer seine Auflagefläche ist um den im Bereich der Stoßstelle 16 zwischen dem Tisch I und dem Streifen 14 liegenden Rand 13 kippbar, um den Tisch I so auszurichten, daß er zu einer Anlagekante 21 hin abfallend geneigt ist. Beispielsweise ist der mit Haken 12 bestückte Rand 11 des Tisches I anhebbar, so daß der Tisch I in Richtung auf den Streifen 14 hin abfällt. Eine auf dem schrägen Tisch I liegende Glastafel gleitet auf dem Tisch I, z.B. auf einem Luftkissen, nach "unten", bis sie an der durch ein Trum 22 eines Förderbandes 20 gebildeten Anlagekante 21 anliegt. Diese Anlagekante 21, die durch das Förderband 20 gebildet wird, bildet eine Referenzlinie und definiert die Lage der Glastafel auf dem Tisch I, bevor sie zur Trennstelle A (mit einer Trennvorrichtung für Float-Glas und/oder Verbundglas) bewegt wird.

Die Auflagefläche des Tisches I wird in eine horizontale Lage bewegt, nachdem eine Glastafel an der Anlagekante 21 anliegt und an ihr in der später noch beschriebenen Weise fixiert ist. Dann ist der Tisch I ebenso wie die Trennvorrichtung der Trennstelle A, wie bei Glasschneidetischen üblich, horizontal ausgerichtet.

Für ein sicheres Bewegen von Glastafeln auf dem Tisch I genügen - insbesondere bei Luftkissentischen - kleine Winkel. So kann beispielsweise der Rand 11 des Tisches I bei einer Tischlänge von 3 bis 5 m um etwa 2 cm höher sein als der Rand 13.

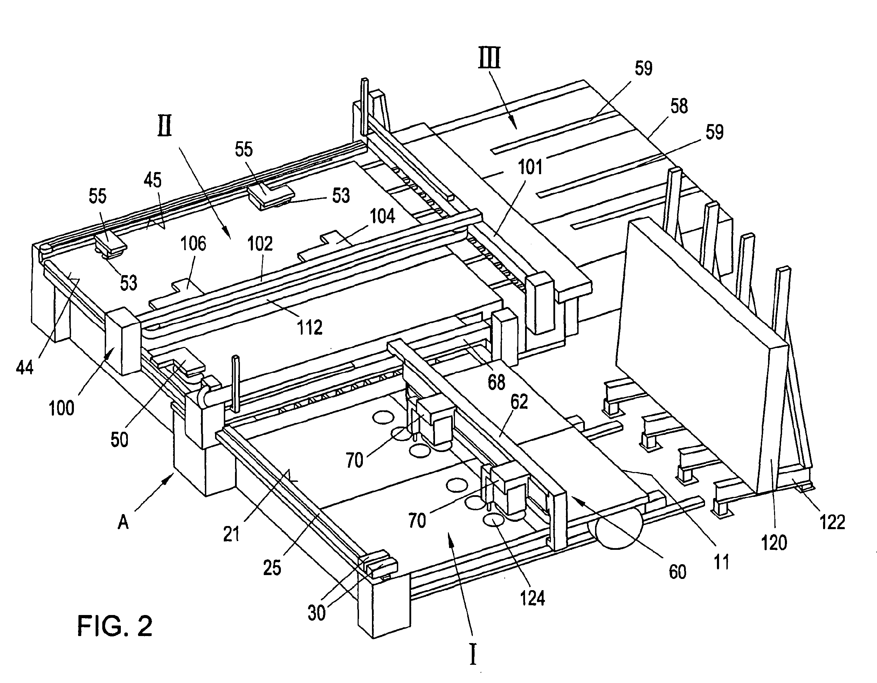

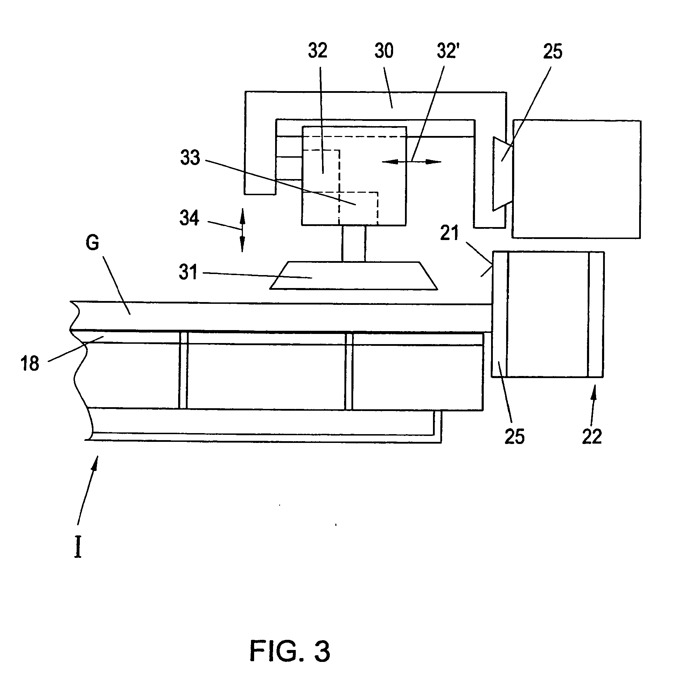

Um eine Glastafel G auf dem Tisch I in Richtung auf die Trennstelle A zu bewegen, ist auf einer parallel zum Förderband 20 ausgerichteten, gestellfesten Führungsschiene 25 wenigstens ein Schlitten 30 (im Ausführungsbeispiel von Fig. 2 zwei Schlitten 30) frei verschiebbar geführt. An dem Schlitten 30 ist wenigstens ein Sauger 31 angeordnet. Der Sauger 31 ist zum Anlegen an die Glastafel G, die auf der beispielsweise von einer Filzlage 18 gebildeten Auflagefläche des Tisches I liegt, durch einen im Schlitten 30 eingebauten Druckmittelmotor 33 absenkbar (Pfeil 34, Fig.3) und kann dann mit Hilfe eines weiteren im Schlitten 30 eingebauten Druckmittelmotors 32 so belastet werden (Pfeil 32', Fig.3). So zieht der Sauger 30 die Glastafel G gegen das die Aniagekänte 21 (Referenzlinie) bildende Trum 22 des Förderbandes 20, wodurch die Glastafel G durch Kraftschluss mit dem Förderband 20 gekuppelt wird. Durch Bewegen des Förderbandes 20 kann die Glastafel G auf dem Tisch I bewegt werden, wobei die Reibung durch das Luftkissen zwischen Tisch I und Glastafel G klein ist.

Knapp vor der Trennstelle A ist am Tisch I eine Vorrichtung 35 (Sensor) vorgesehen, welche die vordere Kante der Glastafel erfasst, um eine Referenzlage zu definieren. Anstelle dieser Vorrichtung 35 kann auch ein einfacher Anschlag vorgesehen sein, der nach dem Festlegen der Referenzlage wegbewegt, z.B. abgesenkt, wird.

Durch Bewegen des Förderbandes 20, mit dem die Glastafel über den (wenigstens einen) Schlitten 30 mit (wenigstens einem) Sauger 31 gekuppelt ist (ein gesonderter Antrieb für den Schlitten 30 kann zwar vorgesehen sein, ist aber in der Regel entbehrlich), wird die Glastafel schrittweise zur Trennstelle A bewegt und es werden in der Glastafel die X-Schnitte ausgeführt. Das Ausmaß des Vorschubes der Glastafel G zur Trennstelle A wird mit einem mit dem Förderband 20, insbesondere mit dessen Antrieb, gekuppelten Weggeber (Inkrementalgeber) erfasst und aufgrund der so erfassten Wege der Glastafel diese gegenüber der Trennstelle A so ausgerichtet, daß sie jeweils an der gewünschten Stelle geteilt wird. Bevor mit dem Verschieben der Glastafel G begonnen wird, wird der Tisch I in seine zur Ausrichtung der Trennstelle A parallele (horizontale) Lage bewegt (gekippt).

Die so erhaltenen Glasstreifen (Glastafel-Zuschnitte, sogenannte "Traveren") gelangen auf den Tisch II. Dieser Tisch II ist horizontal ausgerichtet.

Zum Fördern eines Glastafel-Zuschnittes von der Trennstelle A weg ist am Tisch II an seiner senkrecht zur Trennstelle A ausgerichtete Kante 44 eine Fördereinrichtung für Glastafel-Zuschnitte vorgesehen, mit der ein Glastafel-Zuschnitt auf dem Tisch II in Anlage an beide Anlagekanten 44,45, die beide Trume 42, 48 von Förderbändern 40, 46 sind, bewegt werden kann. So wird die eine Ecke des Glastafel-Zuschnittes G in einem Referenzpunkt 43, im Beispiel dem Schnittpunkt der beiden Anlagekanten 44,45, angeordnet.

Durch einen Sensor oder Endschalter 47 wird festgestellt, daß ein Glastafel-Zuschnitt an der Anlagekante 45 anliegt.

Im gezeigten Ausführungsbeispiel sind an beiden Anlagekanten 44,45, des Tisches II Förderbänder 40, 46 vorgesehen, denen Sauger 51, 53 auf Schlitten 50, 55 (vgl. Fig. 1) zugeordnet sind, wie sie zuvor für den Tisch I beschrieben worden sind. Mit dem Sauger 53, der an der zur Trennstelle A parallelen, dieser gegenüberliegenden (entfernten) und zur Trennstelle B normal stehenden Anlagekante 45 des Tisches II vorgesehen ist, werden Glastafel-Zuschnitte, die wie zuvor beschrieben, über den wenigstens einen Schlitten 55 mit wenigstens einem Sauger 53 mit dem Förderband 46 gekuppelt sind, schrittweise zur Trennstelle B (zweite Trennvorrichtung) transportiert, um die Trennvorgänge in Y-Richtung auszuführen. Auch vor der Trennstelle B kann ein Sensor 57 zum Erfassen der vorderen Kante eines Glastafel-Zuschnittes vorgesehen sein.

Das Förderband 40 an der zur Trennstelle A senkrechten Anlagekante 44 des Tisches II und der dort an der Anlagekante 44 vorgesehene Schlitten 50 mit Sauger 51 hat die Aufgabe, Glastafel-Zuschnitte entlang der Anlagekante 44 zu bewegen.

Der nach der Trennstelle B angeordnete Tisch III, fluchtet mit dem Tisch II, so daß die Tische II und III in einer (einzigen) Ebene liegen. Um den Abtransport der nach dem Teilen durch die Trennstelle B erhaltenen Glas-Zuschnitte zu erleichtern, kann der Tisch III nach dem Ausführen eines Trennvorganges im Bereich seiner Kante 58 abgesenkt werden. In dem Tisch III können auch Hebeleisten 59 zum Hochkippen von Glastafel-Zuschnitten eingelassen sein.

An jeder der Anlagekanten 21, 44 und 45 der Tische I und II ist je wenigstens ein Schlitten 30, 50, 55 mit wenigstens einem Sauger 31, 51 53 (an den Schlitten können auch je zwei Sauger vorgesehen sein) vorgesehen. Dies ist ein Minimalerfordernis, da an der Anlagekante 21, der Anlagekante 44 und/oder der Anlagekante 45 auch zwei oder mehr Schlitten 30, 50, 55 mit je wenigstens einem Sauger 31, 51, 53 vorgesehen sein können, um große und/oder schwere Glastafeln sicher zu bewegen (vgl. Fig. 2). Oft genügt aber ein Schlitten je Anlagekante, insbesondere wenn dieser im Mittelbereich von Glastafeln oder Glastafel-Zuschnitten angreift und diese mit hinreichend großer Kraft gegen das die Anlagekante 21, 44, 45 (Referenzlinie) bildende Trum 22, 42, 49 des jeweiligen Förderbandes 20, 40, 46 zieht. Wenn an den Anlagekanten 21, 44 und/oder 45) beispielsweise zwei Schlitten mit je wenigstens einem Sauger 31 vorgesehen sind, können diese auch abwechselnd an Glastafeln bzw. an Glastafel-Zuschnitten angreifen.

Um die Schlitten 30, 50, 55 in ihre Ausgangslage zurückzubewegen, wird das jeweilige Förderband 20, 40, 46 umgesteuert, d.h. es läuft in die entgegengesetzte Richtung und der Schlitten 30, 50, 55 wird über einen Mitnehmer mit dem Förderband 20, 40, 46 gekuppelt, indem der Mitnehmer gegen das Förderband 20, 40, 46 gedrückt wird.

Im Bereich des Tisches I ist im gezeigten Ausführungsbeispiel eine weitere Fördervorrichtung 60 vorgesehen. Diese Fördervorrichtung 60 kann dazu benutzt werden, um in Kombination mit dem Förderband 20 und dem Schlitten 30 an der Anlagekante 21 eine Glastafel zur ersten Trennstelle A zu bewegen. Die Fördereinrichtung 60 kann aber auch dazu herangezogen werden, gleichzeitig oder unabhängig vom Transportieren einer Glastafel durch das Förderband 20 und den Schlitten 30 eine weitere Glastafel zur Trennstelle A hinzubewegen.

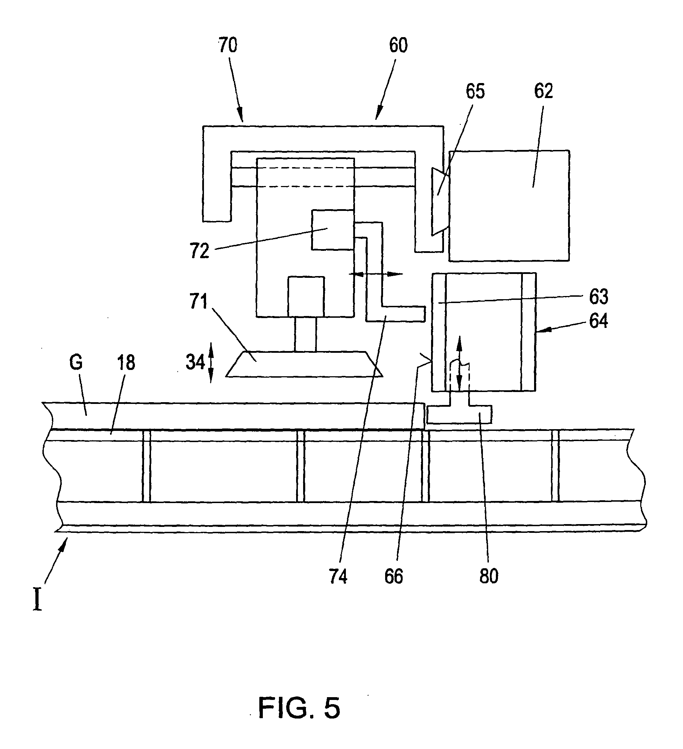

Im einzelnen ist die zweite Fördereinrichtung 60 im Bereich über der Auflagefläche des Tisches I wie folgt aufgebaut (Fig. 5): An einem am Tisch I ortsfest montierten Balken 62 ist unten ein endlos umlaufendes Förderband 64 z.B. in Form eines Zahnriemens, mit Abstand über der Auflagefläche 18 des Tisches I vorgesehen, dessen Anlagefläche 66 zur Auflagefläche des Tisches I im wesentlichen normal ausgerichtet ist. Oberhalb des Förderbandes 64 ist am Balken 62, der einerseits am Tisch I und anderseits am Balken 68 der Trennstelle A montiert sein kann, eine Führungsschiene 65 für (wenigstens) einen Schlitten 70 vorgesehen. Der Schlitten 70 trägt wenigstens einen Sauger 71, der auf eine auf der Auflagefläche 18 des Tisches I liegende Glastafel G abgesenkt (Pfeil 34) werden kann. Dabei ist die Anordnung des Förderbandes 64 so getroffen, daß dieses von der Auflagefläche 18 des Tisches I einen Abstand aufweist, der so groß ist, daß auch die dickste Glastafel G unter ihm hindurchbewegt werden kann.

Um den Schlitten 70 mit dem Sauger 71 mit dem Förderband 64 zu kuppeln, ist an dem Schlitten 70 ein Druckmittelmotor 72 vorgesehen, der einen Stempel 74 gegen das Trum 63 des Förderbandes 64 drückt, das dem Schlitten 70 benachbart ist, so daß der Schlitten 70 mit dem Förderband 64 bewegt und damit auch eine Glastafel G, an die der Sauger 71 des Schlittens 70 angelegt worden ist, mitgenommen wird.

Um eine Glastafel G parallel zur Bewegungsrichtung des Förderbandes 64 der Fördervorrichtung 60 auszurichten, können absenkbare Anschläge 80, z.B. Anlagestifte, vorgesehen sein, die eine "Null-Linie" (Referenz-Linie) definieren und gegen welche die Glastafel G in Anlage gebracht wird.

Es versteht sich, daß anstelle des einen Schlittens 70 mit wenigstens einem Sauger 71 auch zwei oder mehrere Schlitten 70 jeweils mit wenigstens einem Sauger 71 vorgesehen sein können, um den sicheren Transport von Glastafeln G durch die zusätzliche Fördervorrichtung 60 auf dem Tisch I zu ermöglichen.

In einer abgeänderten Ausführungsform kann die Fördervorrichtung 60 statt ortsfest auch verstellbar sein, so daß ihr Abstand von der vom Förderband 20 gebildeten Anlagekante 21 verändert werden kann.

In dem gezeigten Ausführungsbeispiel einer Vorrichtung zum Zerteilen von Glastafeln (Glasschneidetisch) ist im Bereich des Tisches II eine zusätzliche Fördereinrichtung 100 vorgesehen, mit der Glastafel-Zuschnitte auf dem Tisch II zur zweiten Trennstelle B hin gefördert werden können. Diese Fördervorrichtung 100 besitzt einen Balken 102. Der Balken 102 ist mit Abstand über der Auflagefläche des Tisches II mit seinem im Bereich der Anlagekante 44 liegenden Ende mit dem Gestell des Tisches II und im Bereich der zweiten Trennstelle B mit einem Balken 101 dieser Trennstelle B verbunden. Der Balken 102 kann ortsfest montiert oder quer zur Trennstelle A verstellbar sein.

An dem Balken 102 sind im gezeigten Ausführungsbeispiel zwei Schlitten 104, 106 auf Führungsschienen verfahrbar, wobei jeder Schlitten 104, 106 einen, oder bevorzugt zwei Sauger 108 trägt, die an auf der Auflagefläche des Tisches II liegende Glastafel-Zuschnitte G (erhalten durch Teilen einer Glastafel in der Trennstelle A) durch Ansaugen festlegbar sind.

An jedem Schlitten 104, 106 ist weiters ein absenkbarer Anschlag 110 vorgesehen. Glastafel-Zuschnitte G werden mit Hilfe des Schlittens 50 und des Förderbandes 40 bis in Anlage an die Anschläge 110 bewegt, um sie in einer bestimmten vorgegebenen Referenzlage auszurichten, bevor sie von der Fördereinrichtung 100 zur Trennstelle B hin bewegt werden.

Die Schlitten 104, 106 mit den (je zwei) Saugern 108 werden entlang des Balkens 102 durch Kuppeln mit einem Endlosriemen 112 bewegt, wozu die Schlitten 104, 106 unabhängig voneinander durch Kuppelvorrichtungen 114 an dem Riemen 112 festlegbar sind. Die Kuppel-Vorrichtungen 114 sind im Ausführungsbeispiel am Schlitten 104, 106 durch Druckmittelzylinder verschiebbar angeordnete Stempel 116, die gegen den Riemen 112 gepresst werden können.

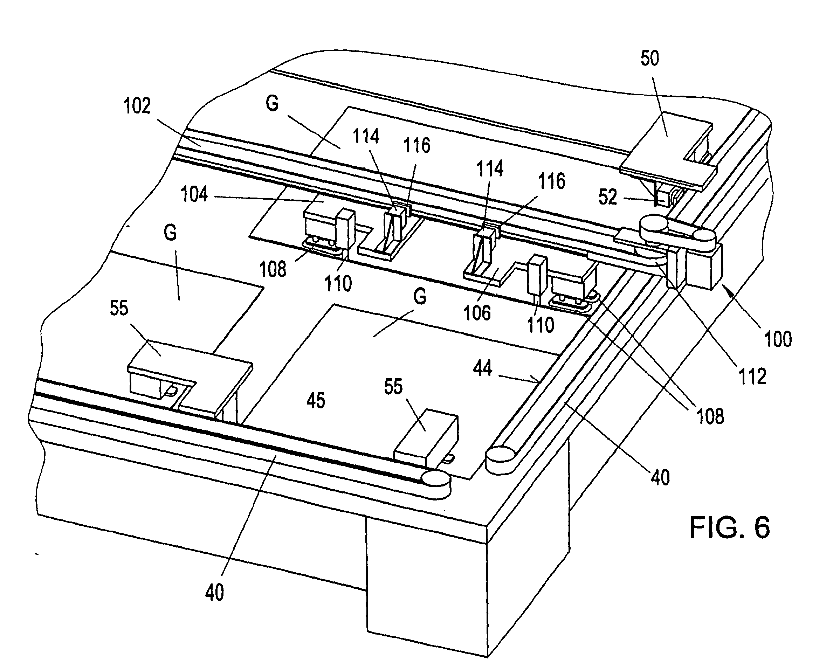

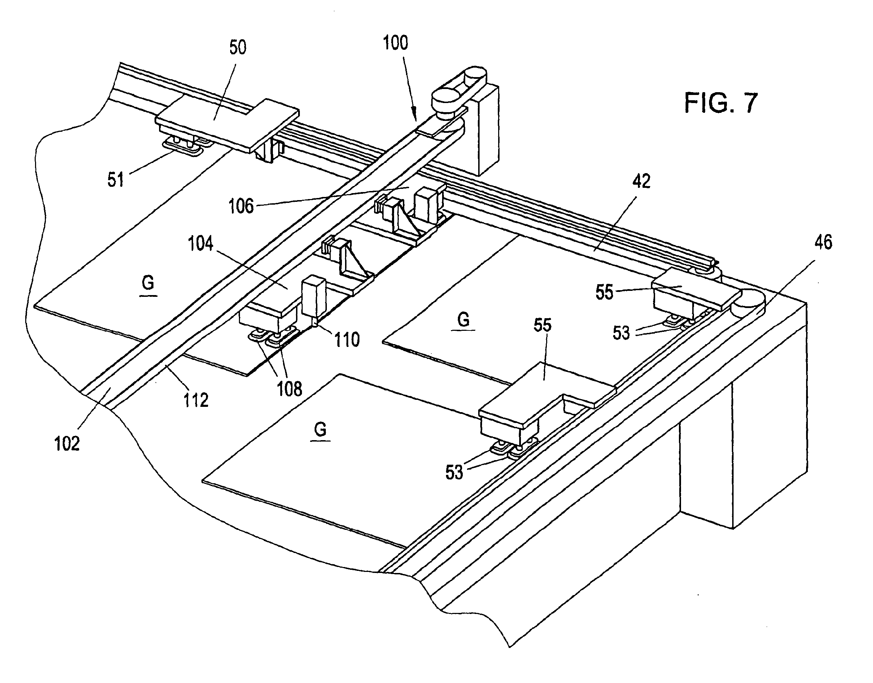

Bei der in den Fig. 6 und 7 in Einzelheiten gezeigten Ausführungsform ist der wenigstens eine Schlitten 50, der an der Anlagekante 44 des Tisches II verfahrbar ist, dazu vorgesehen, nach dem Teilen in der Trennvorrichtung A erhaltene Glastafel-Zuschnitte an der durch den Transportriemen 40 im Bereich der Anlagekante 44 vorgesehenen Referenzlinie anliegend, von der Trennstelle A wegzubewegen. Hiezu ist der Schlitten 50 im Bereich der Anlagekante 44 des Tisches II auf einer Führungsschiene verschiebbar geführt. Das Kuppeln des Glastafel-Zuschnittes mit dem Förderband 40 erfolgt entweder (wie oben erläutert) durch Verstellen des Saugkopfes 51 am Schlitten 50, um den Rand des Glastafel-Zuschnittes an das Förderband 40 zu pressen, oder aber der Schlitten 50 wird mit dem dort vorgesehenen Transportriemen 40 über eine Kuppelvorrichtung 52 ähnlich den Kuppelvorrichtungen 114 mit Stempel 116 an den Schlitten 104, 106 gekuppelt, um einen Glastafel-Zuschnitt zu transportieren. In der ersten Alternative ist vorgesehen, daß der Saugkopf 51 am Schlitten 50 senkrecht zur Anlagekante 44 verstellbar ist, so daß die Glastafel durch Beaufschlagen des Saugkopfes 51 in Richtung auf die Anlagekante 44 zu gegen diese Anlagekante (gebildet vom Trum 42 des Förderbandes 40) gezogen wird. Mit Hilfe des Schlittens 50 werden Glastafel-Zuschnitte entlang der Kante 44 entweder bis in Anlage an die Anlagekante 45 des Tisches II bewegt, so daß sich eine ihrer Ecken im Referenzpunkt 43 befindet, oder aber nur bis in Anlage an die von den Schlitten 104, 106 am Balken 102 abgesenkten Anlagefinger 110 bewegt. Die Kuppelvorrichtung 52 des Schlittens 50 kann auch dazu verwendet werden, den Schlitten 50 für den Rücktransport in seine Ausgangslage (der Trennstelle A benachbart) mit dem Förderband 40 zu kuppeln.

Die zwei Fördervorrichtungen am Tisch II erlauben es, zwei Glastafel-Zuschnitte voneinander unabhängig zur Trennstelle B zu bewegen, wo Trennlinien (Y-Schnitte) in den beiden Glastafel-Zuschnitten durch entsprechende Wahl der Vorschubstrecken so ausgerichtet werden können, daß sie gleichzeitig geöffnet werden können.

So wie die Tische I und II kann auch der Tisch III so schräg ausgerichtet werden, daß er in der Richtung abfallend ausgerichtet ist, in der ein Glastafel-Zuschnitt zu bewegen ist, um den Transport von Glastafel-Zuschnitten von der Trennstelle A weg und/oder zur Trennstelle B hin zu unterstützen.

Bevorzugt ist auch der Tisch III so wie die Tische I und II als Luftkissentisch ausgebildet.

Der Arbeitsablauf der (Verbund-)Glasschneideanlage kann beispielshaft wie folgt beschrieben werden:
1) Der Tisch I wird um seinen Rand 11 hochgeklappt, um eine Glastafel aus einem Stapel 120 von Glastafeln, die auf einem Lagerbock 122 stehen, zu übernehmen. Dabei wird die Glastafel am Tisch I über mehrere Sauger 124 festgelegt.
2) Der Tisch I wird in eine zur Anlagekante 21 hin abfallende Lage gekippt. Das Luftkissen am Tisch I wird in Betrieb genommen und die Glastafel gleitet dann auf dem Luftkissen zur Anlagekante 21 hin.
3) In dieser Position wird die Glastafel durch den wenigstens einen Sauger 31 am Schlitten 30 (oder durch Sauger an mehreren, beispielsweise zwei Schlitten 30) kraftschlüssig mit dem Förderband 20 der Anlagekante 21 gekuppelt.
4) Durch Betätigen des Förderbandes 20 wird die Glastafel vorgeschoben, bis sie relativ zur Trennvorrichtung A für einen (ersten) Trennvorgang (X-Schnitt) richtig ausgerichtet ist.
5) Zuvor wurde der Tisch I in seine horizontale Lage geschwenkt.
6) Dann wird bei miteinander fluchtenden Tischen I und II (beide sind horizontal ausgerichtet) durch die Trennvorrichtung der Trennstelle A von der Glastafel ein Glastafel-Zuschnitt abgetrennt. Der so erhaltene Glastafelzuschnitt ("Travere") liegt auf dem Tisch II. Dieser Glastafel-Zuschnitt wird auf dem Tisch II auf einem zwischen der Auflagefläche und dem Glastafel-Zuschnitt erzeugten Luftkissen durch Kuppeln des Glastafel-Zuschnittes mit dem an der Anlagekante 44 vorgesehenen Schlitten 50 über den Sauger 51 mit dem an der Anlage 44 vorgesehenen Förderband 42 gekuppelt und auf dem Tisch II verschoben, bis eine Ecke des Glastafel-Zuschnittes im Referenzpunkt 43 zu liegen kommt.
7) Sobald die Trennvorrichtung der Trennstelle A frei ist, wird ein weiterer Glastafel-Zuschnitt von der auf dem Tisch I entsprechend vorgeschobenen Glastafel abgetrennt.
8) Der zweite Glastafel-Zuschnitt wird entlang der Anlagekante 44 wie zuvor beschrieben, durch das Förderband 40 so weit vorgeschoben, bis er an den Anlagestiften 110, die an den Schlitten 104, 106 auf der Brücke 102 vorgesehen sind, anliegt.
9) Nun werden gleichzeitig oder unabhängig voneinander die beiden auf dem Tisch II liegenden Glastafel-Zuschnitte durch die Schlitten 55 an der Anlagekante 45 des Tisches II einerseits und die Schlitten 104, 106 an dem Balken 102 anderseits zur Trennvorrichtung der Trennstelle B bewegt.
10) In der Trennstelle B werden in den Glastafel-Zuschnitten die Y-Schnitte geöffnet und so die gewünschten Glas-Zuschnitte erhalten, die dann auf den Tisch III gelangen. Dabei wird so gearbeitet, daß in beiden der Trennstelle B zugeführten Glastafel-Zuschnitten ("Traveren"), die nebeneinander auf dem Tisch II zur Trennstelle B vorgeschoben werden, Y-Schnitte gleichzeitig geöffnet werden.
11) Zum Abtransport von nach der Trennstelle B anfallenden Glas-Zuschnitten kann der Tisch III so geneigt werden, daß er von der Trennstelle B zum Rand 58 hin abfallend ausgerichtet ist.
12) Mit Hilfe von Hebeleisten 59 können Glas-Zuschnitte vom Tisch III abgehoben und im wesentlichen lotrecht aufgerichtet werden, um sie beispielsweise auf ein Glaslagergestell abzustellen.

Zusammenfassend kann ein Ausführungsbeispiel der Erfindung wie folgt beschrieben werden:

Eine Anlage zum Teilen von Glastafeln (Float-Glas oder Verbundglas) besitzt zwei Tische I und II sowie zwei Trennstellen A und B. Der vor der ersten Trennstelle A angeordnete Tisch I ist zum Bewegen von auf ihm angeordneten Glastafeln in Richtung auf eine Anlagekante 21 zu dieser Anlagekante 21 hin schräg abfallend ausrichtbar. An der Anlagekante 21 anliegende Glastafeln werden mit Hilfe einer Transportvorrichtung schrittweise zur Trennstelle A bewegt und dort in X-Richtung geteilt. Auf dem zweiten zwischen den beiden Trennstellen A und B angeordnetem Tisch II sind zwei voneinander unabhängig betätigbare Fördervorrichtungen 100 und 46, 55 vorgesehen. Mit Hilfe dieser beiden Fördervorrichtungen können auf den Tisch II gelangende Glastafel-Zuschnitte voneinander unabhängig, aber gleichzeitig der Trennstelle B zugeführt werden, so daß es möglich ist, diese Glas-Zuschnitte in den vorgegebenen Teilungslinien in der Trennstelle B gleichzeitig oder zeitlich überlappend weiter in Glastafel-Zuschnitte zu zerteilen.

## Patentansprüche

1. Verfahren zum Teilen von Glastafeln in Glas-Zuschnitte nach einem vorgegebenen Aufteilungsmuster, bei dem Glastafeln in wenigstens einem ersten Teilungsschritt nach einer Richtung (X-Schnitte) in Glastafel-Zuschnitte und diese dann in wenigstens einem zweiten Teilungsschritt nach einer zum ersten Teilungsschritt senkrecht stehenden Richtung (Y-Schnitte) in Glas-Zuschnitte geteilt werden, **dadurch gekennzeichnet, dass** die nach dem Teilen in X-Richtung erhaltenen Glastafel-Zuschnitte auf dem nach der ersten Trennstelle (A) vorgesehenen Tisch (II) gemeinsam einer zweiten Trennstelle (B), an der die Glastafel-Zuschnitte längs der Y-Schnitte geteilt werden, zugeführt werden, dass wenigstens zwei solcher durch Öffnen der X-Schnitte erhaltene, weiter zu teilende Glastafel-Zuschnitte gleichzeitig der weiteren Trennstelle (B) zugeführt werden und dass die nebeneinander der Trennstelle (B) für die Y-Schnitte zugeführten Glastafel-Zuschnitte gleichzeitig in Glas-Zuschnitte entlang der Y-Schnitte geteilt werden.

2. Verfahren nach Anspruch 1, **dadurch gekennzeichnet, dass** Glastafel-Zuschnitte der zweiten Trennstelle (B) auf einem Tisch (II) aufliegend, von voneinander getrennten Fördermitteln zugeführt werden, um die zweiten Teilungsschritte auszuführen.

3. Verfahren nach Anspruch 1 oder 2, **dadurch gekennzeichnet, dass** (einfache) Glastafeln nach bereits vorher erzeugten Ritzlinien beim Ausführen der zweiten Teilungsschritte insbesondere durch Biegen geteilt werden.

4. Verfahren nach einem der Ansprüche 1 oder 2, **dadurch gekennzeichnet, dass** (einfache) Glastafel-Zuschnitte in der zweiten Trennstelle (B) durch Ritzen und durch Teilen entlang der erzeugten Ritzlinien, insbesondere durch Biegen in Glas-Zuschnitte geteilt werden.

5. Verfahren nach einem der Ansprüche 1 oder 2, **dadurch gekennzeichnet, dass** Verbundglas beim Ausführen des zweiten Teilungsschrittes zunächst auf beiden Seiten geritzt, dann die beiden Glasscheiben des Verbundglases entlang der Ritzlinien gebrochen und schließlich die Kunststofffolie nach dem Auseinanderziehen der so erhaltenen Teile des Glastafel-Zuschnittes durchgetrennt wird.

6. Vorrichtung zum Ausführen des Verfahren nach einem der Ansprüche 1 bis 6, mit wenigstens zwei Trennstellen (A, B), in denen die Glastafeln in zueinander senkrecht stehenden Richtungen zunächst in Glastafel-Zuschnitte und dann in Glas-Zuschnitte geteilt werden, wobei vor der ersten Trennstelle (A) ein Tisch (I) und zwischen den beiden Trennstellen (A, B) ein Tisch (II), jeweils mit Auflagefläche für die Glastafel bzw. Glastafel-Zuschnitte vorgesehen sind, **dadurch gekennzeichnet, dass** am Tisch (II) zwei voneinander unabhängig betätigbare Fördervorrichtungen (46, 55) und (100) für das Bewegen von nach der ersten Trennstelle (A) erhaltenen Glastafel-Zuschnitten (G) zur zweiten Trennstelle (B) hin vorgesehen sind und dass für das Bewegen von Glastafel-Zuschnitten (G) in einer Richtung senkrecht zur ersten Trennstelle (A) eine dritte Fördervorrichtung (40, 50) vorgesehen sind.

7. Vorrichtung nach Anspruch 6, **dadurch gekennzeichnet, dass** die Fördervorrichtungen (46, 55; 100) entlang von Führungsbahnen verfahrbare Schlitten (55; 104, 106), die an den Glastafel-Zuschnitten festlegbar sind, aufweisen.

8. Vorrichtung nach Anspruch 7, **dadurch gekennzeichnet, dass** an den Schlitten (55; 104, 106) je wenigstens ein Sauger (53, 108) vorgesehen ist, der an die Oberseite der Glastafel-Zuschnitte anlegbar ist.

9. Vorrichtung nach einem der Ansprüche 6 bis 8, **dadurch gekennzeichnet, dass** jede Fördervorrichtung (46, 55; 100) wenigstens zwei Schlitten (55; 104, 106) mit je wenigstens einem Sauger (53, 108) besitzt.

10. Vorrichtung nach einem der Ansprüche 6 bis 9, **dadurch gekennzeichnet, dass** die dritte Fördervorrichtung wenigstens einen Schlitten (50), der am Glastafel-Zuschnitt (G) festlegbar ist, aufweist.

11. Vorrichtung nach Anspruch 10, **dadurch gekennzeichnet, dass** der Schlitten (50) wenigstens einen Sauger (51), der auf dem Glastafel-Zuschnitt (G) festlegbar ist, besitzt.

12. Vorrichtung nach einem der Ansprüche 6 bis 11, **dadurch gekennzeichnet, dass** die senkrecht zur Trennrichtung der ersten Trennstelle (A) wirkende Fördervorrichtung (40, 50) am Rand (44) des Tisches (II) vorgesehen ist.

13. Vorrichtung nach einem der Ansprüche 6 bis 12, **dadurch gekennzeichnet, dass** der Schlitten (104, 106) der einen Fördervorrichtung (100), welche Glastafel-Zuschnitte (G) zur zweiten Trennstelle (B) befördert, auf einer am Rand des Tisches (II) befestigten und sich über dem Tisch (II) erstreckenden Führung (102) verschiebbar ist.

14. Vorrichtung nach einem der Ansprüche 6 bis 13, **dadurch gekennzeichnet, dass** der Schlitten (55) der anderen Fördervorrichtung (46, 55), welche Glastafel-Zuschnitte (G) zur zweiten Trennstelle (B) befördert, auf einer entlang des zur ersten Trennstelle (A) parallelen Randes des Tisches (II) angeordneten Führung verschiebbar ist.

15. Vorrichtung nach Anspruch 14, **dadurch gekennzeichnet, dass** der Schlitten (104, 106), der am Balken (102) verfahrbar ist, wenigstens einen Anlagestift (110) für das Ausrichten eines Glastafel-Zuschnittes (G) aufweist.

16. Vorrichtung nach einem der Ansprüche 6 bis 15, **dadurch gekennzeichnet, dass** die am Tisch (II) verfahrbaren Schlitten (55; 104, 106) mit Endlosförderbändern (46, 112) kuppelbar sind.

17. Vorrichtung nach Anspruch 16, **dadurch gekennzeichnet, dass** zum Kuppeln mit den Förderbändern (46) der an einem Glastafel-Zuschnitt festgelegte Sauger (53) der Schlitten (55) in Richtung auf das Förderband (46) derart belastet wird, dass der Glastafel-Zuschnitt kraftschlüssig am Förderband (46) anliegt.

18. Vorrichtung nach Anspruch 16, **dadurch gekennzeichnet, dass** die am Balken (102) verfahrbaren Schlitten (104, 106) durch Kuppelvorrichtungen (114) mit einem Endlosförderband (112) kuppelbar sind.

19. Vorrichtung nach Anspruch 18, **dadurch gekennzeichnet, dass** die Kuppelvorrichtung einen an das Förderband (112) anlegbaren Klemmstempel (116) trägt.

20. Vorrichtung nach einem der Ansprüche 6 bis 19, **dadurch gekennzeichnet, dass** der vor der ersten Trennstelle (A) vorgesehene Tisch (I) in Richtung auf eine seiner quer zur Wirkrichtung der ersten Trennstelle (A) verlaufenden Kanten (13) hin abfallend ausrichtbar ist.

21. Vorrichtung nach einem der Ansprüche 6 bis 20, **dadurch gekennzeichnet, dass** neben dem Tisch (I) vor der ersten Trennstelle (A) eine Vorrichtung zum Auflegen von Glastafeln vorgesehen ist.

22. Vorrichtung nach Anspruch 21, **dadurch gekennzeichnet, dass** der Tisch (I) zum Übernehmen von Glastafeln aus einem Stapel (120) hochklappbar ist.

## Claims

1. Process for dividing glass sheets into glass shapes according to a given dividing pattern, in which glass sheets are divided in at least one first dividing step in one direction (X-cuts) into glass sheet shapes, and these then are divided in at least one second dividing step in a direction which is perpendicular to the first dividing step (Y-cuts) into glass shapes, **characterized in that** the glass sheet shapes obtained after the dividing in X-direction are supplied jointly on a table (II), provided after a first cutting site (A), to a second cutting site (B), at which the glass sheet shapes are divided along the Y-cuts, that at least two of those glass sheet shapes, which are obtained by opening the X-cuts and are to be divided further, are simultaneously supplied to the further cutting site (B), and that the glass sheet shapes supplied next to each other to the cutting site (B) for the Y-cuts are simultaneously divided into glass shapes along the Y-cuts.

2. Process according to claim 1, **characterized in that** glass sheet shapes are supplied to the second cutting site (B) in order to execute the second dividing steps resting on a table (II) by conveyor means which are separate from each other.

3. Process according to claim 1 or 2, **characterized in that**, (single) glass sheets are divided according to scratch lines already produced beforehand when executing the second dividing steps, especially by bending.

4. Process according to claim 1 or 2, **characterized in that** (single) glass sheet shapes in the second cutting site (B) are divided into glass shapes by scratching and dividing along the produced scratch lines, especially by bending.

5. Process according to claim 1 or 2, **characterized in that**, laminated glass when executing the second dividing step is first scratched on both sides, then the both glass sheets of the laminated glass are broken along the scratch lines and finally the plastic film is cut after pulling apart the parts of the glass sheet shape obtained in this way.

6. Device for executing the process according to one of claims 1 to 6, with at least two cutting sites (A, B) in which the glass sheets are first divided into glass sheet shapes and then into glass shapes in directions perpendicular to each other, whereas in front of the first cutting site (A) a table (I) and between the two cutting sites (A, B) a table (II), each with a support surface for the glass sheet or the glass sheet shapes respectively, are provided, **characterized in that** two conveyor devices (46, 55) and (100) which can be actuated independently from each other are provided at table (II) for moving the glass sheet shapes (G) obtained after the first cutting site (A) towards the second cutting site (B), and that a third conveyor device (40, 50) for moving the glass sheet shapes (G) in a direction perpendicular to the first cutting site (A) is provided.

7. Device according to claim 6, **characterized in that** the conveyor devices (46, 55; 100) comprise carriages (55; 104, 106), which can be moved along guideways and which can be locked on the glass sheet shapes.

8. Device according to claim 7, **characterized in that** on the carriages (55; 104, 106) at least one suction head (53, 108) is provided respectively, which can be placed against the upper side of the glass sheet shapes.

9. Device according to one of claims 6 to 8, **characterized in that** each conveyor device (46, 55; 100) has at least two carriages (55; 104, 106) with at least one suction head (53, 108) respectively.

10. Device according to one of claims 6 to 9, **characterized in that** the third conveyor device comprises at least one carriage (50), which can be locked on the glass sheet shape (G).

11. Device according to claim 10, **characterized in that** the carriage (50) has at least one suction head (51), which can be locked on the glass sheet shape (G).

12. Device according to one of the claims 6 to 11, **characterized in that** the conveyor device (40, 50) acting perpendicular to the cutting direction of the first cutting site (A) is provided at the edge (44) of table (II).

13. Device according to one of claims 6 to 12, **characterized in that** the carriage (104, 106) of the one conveyor device (100), which conveys glass sheet shapes (G) to the second cutting site (B), can be moved on a guide (102) which is fixed to the edge of the table (II) and extends over the table (II).

14. Device according to one of claims 6 to 13, **characterized in that** the carriage (55) of the other conveyor device (46, 55), which conveys glass sheet shapes (G) to the second cutting site (B), can be moved on a guide (102) located along the edge of the table (II), which edge is parallel to the first cutting site (A).

15. Device according to claim 14, **characterized in that** the carriage (104, 106) which can be moved on the beam (102) comprises at least one contact pin (110) for aligning a glass sheet shape (G).

16. Device according to one of claims 6 to 15, **characterized in that** the carriages (55; 104, 106) which can be moved on the table (II) can be coupled to continuos conveyor belts (46, 112).

17. Device according to claim 16, **characterized in that** for coupling to the conveyor belts (46) the suction head (53) of the carriages (55) which is locked on the glass sheet is loaded in the direction towards the conveyor belt (46), such that the glass sheet shape by frictional adherence rests against the conveyor belt (46).

18. Device according to claim 16, **characterized in that** the carriages (104, 106) which can be moved on beam (102) can be coupled by coupling devices (114) to a continuos conveyor belt (112).

19. Device according to claim 18, **characterized in that** the coupling device bears a clamping plunger (116) which can be placed against the conveyor belt (112).

20. Device according to one of claims 6 to 19, **characterized in that** the table (I) which is provided in front of the first cutting site (A) can be aligned sloping down in the direction to the edges (13) which run transversely to the direction of action of the first cutting site (A).

21. Device according to one of claims 6 to 20, **characterized in that** next to the table (I) in front of the first cutting site (A) a device for depositing glass is provided.

22. Device according to claim 21, **characterized in that** the table (I) can be folded up for accepting glass sheets from a stack (120).

## Revendications

1. Procédé de découpe de plaques de verre en pièces de verre découpées selon un modèle de division prédéfini, dans lequel des plaques de verre sont divisées, dans au moins une première étape de division selon une direction (coupes X), en pièces de verre découpées et celles-ci sont ensuite divisées, dans au moins une deuxième étape de division selon une direction (coupes Y) perpendiculaire à la première étape de division, en pièces de verre découpées, **caractérisé en ce que** les pièces découpées de plaques de verre obtenues après la division en direction X sont amenées ensemble, sur la table (II) prévue en aval du premier point de séparation (A), à un deuxième point de séparation (B), auquel les pièces découpées de plaques de verre sont divisées le long des coupes Y, **en ce qu'**au moins deux telles pièces découpées de plaques de verre, obtenues par l'ouverture des coupes X et qui sont encore à diviser, sont amenées simultanément à l'autre point de séparation (B) et **en ce que** les pièces découpées de plaques de verre amenées les unes à côté des autres au point de séparation (B) pour les coupes Y sont divisées simultanément en pièces découpées de verre le long des coupes Y.

2. Procédé selon la revendication 1, **caractérisé en ce que** les pièces découpées de plaques de verre sont amenées, en étant posées à plat sur une table (II), au deuxième point de séparation (B) par des moyens de transport séparés les uns des autres, afin d'exécuter les deuxièmes étapes de division.

3. Procédé selon la revendication 1 ou 2, **caractérisé en ce que** des plaques de verre (simples) sont séparées, notamment par flexion, selon des lignes de rayure déjà réalisées auparavant lors de l'exécution des deuxièmes étapes de division.

4. Procédé selon l'une quelconque des revendications 1 ou 2, **caractérisé en ce que** des pièces découpées (simples) de plaques de verre sont divisées en pièces de verre découpées, notamment par flexion, au deuxième point de séparation (B) par rayure et par division le long des lignes de rayure réalisées.

5. Procédé selon l'une quelconque des revendications 1 ou 2, **caractérisé en ce que** du verre composite, lors de l'exécution de la deuxième étape de division, est d'abord rayé des deux côtés, qu'ensuite les deux vitres du verre composite sont cassées le long des lignes de rayure et que finalement la feuille plastique est sectionnée après l'étirement des pièces découpées de plaques de verre ainsi obtenues.

6. Dispositif pour la réalisation du procédé selon l'une quelconque des revendications 1 à 6, comprenant au moins deux points de séparation (A, B), dans lesquels les plaques de verre sont d'abord divisées en pièces découpées de plaques de verre et ensuite divisées en pièces de verre découpées, en des directions perpendiculaires l'une par rapport à l'autre, une table (I) étant prévue en amont du premier point de séparation (A) et une table (II) étant prévue entre les deux points de séparation (A, B), chacune avec une surface d'appui pour les plaques de verre resp. les pièces découpées de plaques de verre, **caractérisé en ce que** sur la table (II) sont prévus deux dispositifs de transport (46, 55) et (100) actionnables indépendamment l'un de l'autre pour le déplacement de pièces découpées de plaques de verre (G), obtenues en aval du premier point de séparation (A), en direction du deuxième point de séparation (B) et **en ce qu'**un troisième dispositif de transport (40, 50) est prévu pour déplacer les pièces découpées de plaques de verre (G) dans une direction perpendiculaire au premier point de séparation (A).

7. Dispositif selon la revendication 6, **caractérisé en ce que** les dispositifs de transport (46, 55 ; 100) présentent des chariots mobiles (55 ; 104, 106) le long de glissières qui peuvent être fixés sur les pièces découpées de plaques de verre.

8. Dispositif selon la revendication 7, **caractérisé en ce qu'**au moins une ventouse (53, 108) est respectivement prévue sur les chariots (55 ; 104, 106), cette ventouse étant applicable sur le côté supérieur des pièces découpées de plaques de verre.

9. Dispositif selon l'une quelconque des revendications 6 à 8, **caractérisé en ce que** chaque dispositif de transport (46, 55 ; 100) possède au moins deux chariots (55, 104, 106) muni chacun d'au moins une ventouse (53, 108).

10. Dispositif selon l'une quelconque des revendications 6 à 9, **caractérisé en ce que** le troisième dispositif de transport présente au moins un chariot (50) pouvant être fixé sur la pièce découpée de plaque de verre (G).

11. Dispositif selon la revendication 10, **caractérisé en ce que** le chariot (50) possède au moins une ventouse (51) qui peut être fixée sur la pièce découpée de plaque de verre (G).

12. Dispositif selon l'une quelconque des revendications 6 à 11, **caractérisé en ce que** le dispositif de transport (40, 50) agissant perpendiculairement au sens de division du premier point de séparation (A) est prévu sur le bord (44) de la table (II).

13. Dispositif selon l'une quelconque des revendications 6 à 12, **caractérisé en ce que** le chariot (104, 106) de l'un des dispositifs de transport (100), lequel transporte des pièces découpées de plaques de verre (G) vers le deuxième point de séparation (B), est déplaçable sur une glissière (102) fixée sur le bord de la table (11) et s'étendant au-dessus de la table (II).

14. Dispositif selon l'une quelconque des revendications 6 à 13, **caractérisé en ce que** le chariot (55) de l'autre dispositif de transport (46, 55), lequel transporte des pièces découpées de plaques de verre (G) vers le deuxième point de séparation (B), est déplaçable sur une glissière disposée le long du bord de la table (II) parallèle au premier point de séparation (A).

15. Dispositif selon la revendication 14, **caractérisé en ce que** le chariot (104, 106) qui est déplaçable sur la barre (102) présente au moins une goupille d'appui (110) pour l'alignement d'une pièce découpée de plaque de verre (G).

16. Dispositif selon l'une quelconque des revendications 6 à 15, **caractérisé en ce que** les chariots (55 ; 104, 106) déplaçables sur la table (II) peuvent être couplés à des convoyeurs continus (46, 112).

17. Dispositif selon la revendication 16, **caractérisé en ce que** pour le couplage aux convoyeurs (46), la ventouse (53) des chariots (55), fixée sur une pièce découpée de plaque de verre, évolue en direction du convoyeur (46) de telle nianière que la pièce découpée de plaque de verre est appliquée sur le convoyeur (46) en étant entraînée par adhérence.

18. Dispositif selon la revendication 16, **caractérisé en ce que** les chariots (104, 106) déplaçables sur la barre (102) peuvent être couplés à un convoyeur continu (112) au moyen de dispositifs de couplage (114).

19. Dispositif selon la revendication 18, **caractérisé en ce que** le dispositif de couplage porte un poinçon de serrage (116) applicable contre le convoyeur (112).

20. Dispositif selon l'une quelconque des revendications 6 à 19, **caractérisé en ce que** la table (I) prévue en amont du premier point de séparation (A) est ajustable en descendant en direction de l'un de ses bords (13) s'étendant transversalement au sens d'action du premier point de séparation (A).

21. Dispositif selon l'une quelconque des revendications 6 à 20, **caractérisé en ce que**, outre la table (1) en amont du premier point de séparation (A), un dispositif pour poser des plaques de verre est prévu.

22. Dispositif selon la revendication 21, **caractérisé en ce que** la table (1) destinée à prendre des plaques de verre à partir d'une pile (120) est rabattable vers le haut.
